# EUROPEAN PATENT APPLICATION

(11) **EP 4 679 776 A1**
(43) Date of publication of application: **14.01.2026**
(21) Application number: 25188243.7
(22) Date of filing: 08.07.2025
(51) Int. Cl.: H04L 12/40

(54) **SYSTEMS AND METHODS FOR A MODBUS COMMAND/RESPONSE PROTOCOL**

(30) Priority: 08.07.2024 US 202463668756 P
(71) Applicant: nVENT SERVICES GMBH, 8200 Schaffhausen (CH)
(72) Inventor: SOUTHWELL, David T, Alberta, T8B1A4 (CA)
(74) Representative: Barker Brettell LLP

(57) **Abstract**

Systems and methods for communication between a management system (20) and a plurality of devices (18, 19) over a communication line (23) are provided. One method includes the management system generating a Modbus packet (46) comprising a block write command to a first contiguous array of registers of a device of the plurality of devices, collectively designated as a command buffer (42), where the block write command corresponds to a request for the device to perform an action, and a block read command to a second contiguous array of registers of the device, collectively designated as a response buffer (44). The method also includes the management system transmitting the Modbus packet over the communication line to the device and receiving data from the response buffer in response to the block read command, where the data is written into the response buffer by the device based on the request.

## Description

### RELATED APPLICATIONS

This application claims priority under 35 U.S.C. § 119 to United States Provisional Patent Application No. 63/668,756 filed on July 8, 2024, the entire contents of which is incorporated herein by reference.

### BACKGROUND

Heat trace solutions utilize electric heating elements, such as electric heat trace cables, to apply heat to an external surface. Such heat trace solutions may be used to keep critical processes operational, protect pipes and equipment from freezing, keep the flow in transfer lines, and provide winter safety and comfort heating in buildings and homes. Example heat trace applications can include, but are not limited to: temperature maintenance (e.g., to ensure a specialized hot water supply to keep fluids and liquids at desired temperature levels and/or protect critical safety lines); industrial tank insulation systems (e.g., to keep stored liquids at a constant temperature); industrial, commercial, and residential surface snow melting; roof and gutter deicing; fire-rated wiring (e.g., to protect critical electrical circuits during a fire or other emergency); process temperature maintenance (e.g., ensuring fluid temperature maintenance with industrial process heating equipment); pipe freeze protection; offshore and maritime anti-icing and de-icing; industrial, commercial, and residential flow maintenance (e.g., maintaining the temperature of fluids in pipes to ensure continuous flow); long pipeline heating; rail heating; and frost heave protection.

Looking to one particular example, piping systems are often used to transport a liquid and/or gas product, such as a petroleum product, over large distances, such as from an extraction point to a processing facility. If the extraction location and/or the processing facility are located in a cold weather environment, it may be necessary to provide heat trace cables to maintain the pipe at a desired temperature to prevent the fluid product from freezing, or in temperature sensitive operations, to maintain a temperature that allows for an efficient flow of the fluid product.

One or more electric heat trace cables, along with any associated components, can be known as an electric heating trace (EHT) circuit. Furthermore, each EHT circuit is monitored and/or controlled by a heat trace controller. Heat trace controllers can have multiple functionalities and, often, certain applications contain multiple EHT circuits with multiple respective EHT controllers. These EHT controllers are often connected to a supervisor, or management system, via Modbus data communications protocols over RS-485 serial lines.

### SUMMARY

Some embodiments provide a communication method for a management system of a control system including a plurality devices in communication with the management system over a communication line. The method includes the management system generating a Modbus packet comprising a block write command to a first contiguous array of registers of a device of the plurality of devices, collectively designated as a command buffer, where the block write command corresponds to a request for the device to perform an action, and a block read command to a second contiguous array of registers of the device, collectively designated as a response buffer. The method also includes the management system transmitting the Modbus packet over the communication line to the device and receiving data from the response buffer in response to the block read command, where the data is written into the response buffer by the device based on the request.

Some embodiments provide a communication method for a device within a control system comprising a plurality of devices in communication with a management system over a communication line. The method includes the device receiving a Modbus packet from the management system over the communication line. The Modbus packet includes a block write command to a first contiguous array of registers of the device, collectively designated as a command buffer, where the block write command corresponds to a request for the device to perform an action, and a block read command to a second contiguous array of registers of the device, collectively designated as a response buffer. The method also includes the device interpreting the request based on data within the command buffer, including determining registers of the device associated with the request, where such registers are outside of the first contiguous array of registers and the second contiguous array of registers. The method further includes the device performing the request and writing data into the response buffer based on performing the request, to be read by the management system.

Some embodiments provide a communication method for a device within a control system comprising a plurality of devices in communication with a management system over a communication line. The method includes the device receiving a first Modbus packet from the management system over the communication line. The first Modbus packet includes a first block write command to a first contiguous array of registers of the device, collectively designated as a command buffer, where the first block write command corresponds to a request for the device to perform an action, and a first block read command to a second contiguous array of registers of the device, collectively designated as a response buffer. The method also includes the device writing first data into the response buffer, to be read by the management system through the first block read command, indicating that a response to the request is not yet available. The method further includes the device processing the request based on data within the command buffer, performing the request, and writing second data into the response buffer based on performing the request. The method also includes the device receiving a second Modbus packet from the management system over the communication line, where the second Modbus packet includes a second block read command from the response buffer.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. Features described in connection with the system or any device described may have corresponding features definable and/or combinable with respect to a method or vice versa, and these embodiments are specifically envisaged.

### DESCRIPTION OF THE DRAWINGS

The accompanying drawings, which are incorporated in and form a part of this specification, illustrate embodiments of the invention and, together with the description, serve to explain the principles of embodiments of the invention.
FIG. 1 is a schematic diagram of an electric heat trace (EHT) control system according to some embodiments.
FIG. 2 is a schematic diagram of an industrial control system according to some embodiments.
FIG. 3 is a schematic representation of a portion of a register array of an EHT controller.
FIG. 4 is a schematic representation of a Modbus packet according to some embodiments.
FIG. 5 is a flow chart of an example command/response communications protocol according to some embodiments.
FIG. 6 is a flow chart of another example command/response communications protocol according to some embodiments.
FIG. 7 is a flow chart of an example asynchronous command/response communications protocol according to some embodiments.
FIG. 8 is a schematic diagram of another industrial control system according to some embodiments.
FIG. 9 is a flow chart of yet another example command/response communications protocol according to some embodiments.
FIG. 10 illustrates example memory storing instructions for communicating with a device in an EHT control system, according to some embodiments.
FIG. 11 illustrates example memory storing instructions for communicating with a management system in an EHT control system, according to some embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

The discussion herein is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Heat trace systems may include heating elements, e.g., heat trace cables, to control the temperature of a surface, such as a pipe surface to control the temperature or flow of fluid being transported therein. Each heating element along with its associated components can be known as an electric heating trace (EHT) circuit. Furthermore, each EHT circuit may have a dedicated controller (an "EHT controller") for controlling and/or monitoring the EHT circuit. Example EHT controllers may be adapted for, for example, flow maintenance, frost prevention, hot water temperature maintenance, process temperature maintenance, deicing, anti-icing, or other applications. Generally, each EHT controller may be configured to receive and monitor data related to, for example, surface temperature, fluid flow, fluid temperature, heating element current, and other pertinent information related to the EHT circuit and control the heating element accordingly.

A user can configure the EHT controller with a desired configuration, including desired alarm values, data requests, on/off temperature thresholds, etc. Such data can be communicated to the user via a monitoring system server connected to the EHT controller. Conventional heat trace systems, however, can struggle to support proper data harvesting and control, as data is transmitted at relatively slow rates due to storage and bandwidth limitations of associated connection lines.

For example, many applications often include a plurality of EHT circuits, resulting in a plurality of EHT controllers within such systems, which may have the same or different functionality, including different firmware and hardware (and different firmware versions). EHT controllers are generally connected to management systems using slow and often unreliable Modbus communications protocols over RS-485 serial lines. It is not unusual for hundreds of devices to share a single RS-485 line, which is often also electrically over-length. It is also not unusual for RS-485 lines to be shared by equipment from multiple vendors.

For example, Modbus communication over multi-drop RS-485 lines at 9600 baud gives about 1 kilobyte (kbyte) per second usable capacity. When, for example, one hundred devices share this channel, this results in just 10 bytes per second per device, after factoring for framing overhead. Further factoring arbitration, collisions, soft bit errors, retries, back-offs, and timeouts, it is not hard to understand why some lines today can take minutes to settle in response to a status read.

Notwithstanding communication speed over these lines, in traditional Modbus communication, there is also no command queue. Rather, a single register operation is in flight at any time for a given bus segment. In the case of read operations, the bus is fully occupied during outgoing read packet transmission, the turn-around response time of the target device, and the incoming read response transmission. With some EHT controllers, a bridge must receive the Modbus packet, decode it, generate CAN bus traffic to access its respective target module to recover the data required, compose the read response, and transmit it back to the management system. This can take a considerable amount of time, which is dead time as far as all other devices are concerned. Accordingly, if only one transaction is in progress, there can be no opportunity for parallel transactions across multiple target EHT controllers, seriously limiting throughput at the system level.

Furthermore, many present communications protocols generally assume that every actor on the bus is friendly (and competent). With an anticipated growth in multi-vendor buses, these assumptions may not hold. For example, one current Modbus protocol is open plain text with no native mechanism for encryption or authentication. The corresponding application programming interface (API) is a wide open array of registers to be read from or written to by any agent on the bus able to put together a valid Modbus packet. As such, in some applications, Modbus traffic in a heat trace system may be open for all to see and, so, any entity on the shared wire connections can arbitrarily manipulate any other entity.

Additionally, each EHT controller can be represented by hundreds or thousands of low-level registers (with 16-bit integers) that may be written to when changing controller configurations and read from to extract sensor and performance data. The corresponding management system must map registers for each individual controller, as these registers vary based on controller type (e.g., based on vendor, model number, firmware version number, and/or current relevant controller internal state). That is, a management system talking to many different kinds of devices must incorporate code to handle each specific device. Effectively, the low level driver logic for each device does not live in the device but, rather, the management system is obliged to muster appropriate business logic for all the above permutations. This not only forces a lot of complexity onto the management system, it also creates a huge maintenance burden-each time device behavior changes with new firmware drops, the management system must be updated accordingly.

As such, it is easy to make errors and produce invalid configuration states with this arrangement, resulting in potential false alarms or unwanted thermal regulation behaviors in certain EHT circuits. The process of validating a configuration could be performed by the management system, e.g., by reading back all the registers and making consistency checks on its remote server, yet this process may be bandwidth-prohibitive.

Accordingly, effecting configuration changes may involve numerous Modbus register changes, creating significant traffic on the wire, exacerbating the above-described overload problems. Additionally, operationally, many devices may need to be adjusted at the same time in response to events such as an emergency shutdown, load balancing, or process changes across many circuits. Network traffic is very bursty, but it is precisely during such activity peaks when smooth traffic flow would be most critical. As another example situation, a system may be left in an internally inconsistent state while writes are being performed for a configuration update. If significant interruptions occur during this reconfiguration period, mal-configurations could arise.

In light of the above, present Modbus protocols can be lacking in error control, authentication, and encryption, and operate with register maps at a low level, causing management systems to be overburdened. As the needs of heat trace systems (and industrial systems in general) evolve, including the desire for increased data compiling for analytics, it would be beneficial to provide a way to make secure, efficient, and reliable access to EHT controllers possible while co-existing with standard Modbus traffic. Embodiments of the disclosed invention provide such a solution to address these and other issues.

More specifically, some embodiments provide such a solution by replacing low-level register accesses with high level commands that are communicated in arrays of adjacent Modbus registers, treated collectively as communication buffers. These strings are processed into Modbus packets to improve performance on noisy lines, greatly reduce wire traffic, and introduce security through encryption and authentication protocols. These systems and methods aim to address the above issues while maintaining interoperability with all existing devices on shared Modbus links. While embodiments are described herein with respect to heat trace systems and, particularly, devices such as EHT controllers, it should be noted that the present systems and methods of some embodiments may be applicable to any devices controlled across Modbus links in any type of control system including, for example, industrial control and automation systems.

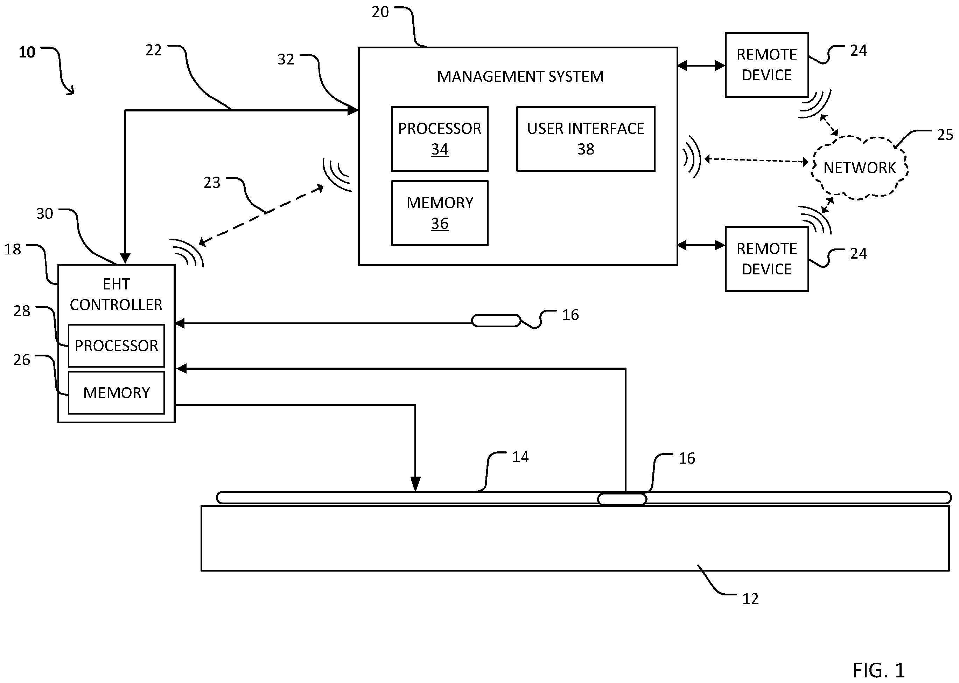

Accordingly, FIG. 1 illustrates an example electric heat trace (EHT) control system 10 according to some embodiments. The EHT control system 10 can be used to heat a surface 12 and monitor the surface 12 and/or its surrounding environment. As such, the EHT control system 10 can include one or more heat trace cables 14, one or more sensors 16, and an EHT controller 18. Furthermore, the EHT controller 18 can communicate with a management system 20 via a wired connection 22, such as an RS-485 serial connection or an ethernet connection, and/or wireless point-to-point or mesh connections 23 (e.g., WiFi, Wi-SUN, Zigbee, Bluetooth^{®}, etc.). The management system 20 may also be further connected to one or more remote devices 24 (e.g., remote user interfaces).

Regarding the surface 12 in FIG. 1, the EHT control system 10 can be used to heat any type of surface in industrial, commercial, or residential applications via the heat trace cables 14. Example surfaces in industrial applications can include, but are not limited to: a pipe that requires freeze protection, such as water supply and drain lines, safety showers and eye washers, firefighting and sprinkler systems, and sewage and sanitary systems; a pipe that requires process temperature maintenance, such as in oil and gas, petrochemical, power, pharma, paper, and food and beverage industries; a pipeline that requires freeze protection, viscosity control, and/or temperature maintenance, such as for heavy oil or Sulphur transport between processing plants, storage tanks, and transportation facilities; foundations or concrete slabs that require frost heave prevention, such as those surfaces in liquified natural gas (LNG) terminals and on cryogenic and low temperature storage tanks; storage tanks that require heating, such as those that store sensitive industrial liquids, to prevent freezing or solidifying and facilitate smooth loading and unloading processes; and/or surfaces in offshore maritime environments, such for heated walkways and stairs, communications equipment; helidecks and lifeboats, etc. Example surfaces in commercial and residential applications can include, but are not limited to: a pipe that requires freeze protection, such as water supply and drain lines, safety showers and eye washers, firefighting and sprinkler systems; sewage and sanitary systems; floors and/or stairs to be heated; roofs and gutters that require deicing; and/or outdoor driveways, walkways, patios, emergency accesses that require surface snow melt, etc.

Referring back to FIG. 1, the heat trace cable 14 of some embodiments can be, for example, any type of heating cable for heating the surface 12. Example heat trace cables 14 include, but are not limited to, self-regulating heating cables, constant wattage heating cables, mineral insulated heating cables, polymer insulated heating cables, skin-effect heating cables, power-limiting heating cables, among others. In reference to pipe heating applications, the heating trace cable 14 can be adapted to heat the pipe surface 12 in order to heat fluid within the pipe. In reference to skin-effect heating cables systems, the heating trace cable 14 can be routed through an additional heat tube (not shown) to heat the surface 12. Additionally, the heat trace cable 14 can include a plurality of heat trace cables 14 in some applications, which can be coupled together, in series or parallel, so that the heat trace cables 14 may be energized or not energized in unison. For example, the heat trace cables 14 can be coupled to a power source (not shown) and power to the heat trace cables 14 from the power source can be controlled via the EHT controller 18. Furthermore, in some applications, the system 10 can incorporate additional components with the heat trace cables 14 to enable lengths of EHT circuits, such as, but not limited to, transformers, power connection boxes, pull boxes, splice boxes, and/or end termination boxes.

Referring still to FIG. 1, in some applications, the EHT control system 10 can utilize one or more sensors 16 to monitor a status of the system 10. For example, the system 10 can include one or more sensors 16 configured to sense surface temperature, fluid temperature, ambient temperature, flow through pipes (in pipe heating applications), current to heat trace cables 14, among other variables. The sensors 16 may be wirelessly connected (e.g., using WiFi or Zigbee) to the EHT controller 18 or coupled to the EHT controller 18 using a wired connection (e.g., a three-wire connection or another connection). In some embodiments, a network of wireless sensors 16 may communicate with the EHT controller 18 using a mesh communication protocol.

According to one example, as illustrated in FIG. 1, a sensor 16 can be placed on an exterior of the surface 12 to sense surface temperature and another sensor 16 can be separate from the surface 12 (e.g., positioned in an area near the surface 12) to sense ambient air temperature. Such sensors 16 can include a resistance thermometer, resistance temperature detector, or other applicable sensors capable of detecting a temperature. In pipe heating applications, fluid temperature and flow may vary along a length of a pipe, or may vary between different pipes. In such cases, multiple sensors 16 can be used to monitor multiple temperatures at different locations along, in, or near the piping system. Alternatively, in such cases, the sensors 16 can include a distributed temperature sensing (DTS) system. For example, DTS systems may be fiber optic-based systems capable of generating spatio-temporal temperature data along a length of the surface 12.

In further examples, such as in pipe heating applications, sensors 16 can be configured to measure a flow of fluid within pipes of the piping system. For example, sensors 16 configured to monitor a flow of the fluid within the pipes can be utilized to alert users of low flow (e.g., a stoppage of flow) of fluid within the pipes. Such sensors 16 can be flow meters or other suitable devices that can measure one or more parameters related to fluid flow, such as flow rate or change of fluid temperature over time. In yet further examples, the system 10 may also include sensors 16 configured to measure other pertinent status values, such as ground fault current. Any of these sensors 16 can be communicatively coupled to the EHT controller 18 to provide data to the EHT controller 18 for monitoring and EHT system management.

Referring back to FIG. 1, an EHT controller 18 can include a memory 26 configured to store data and EHT monitoring, control, and/or communications protocol programs, and a processor 28 configured to execute such programs. For example, in some embodiments, an EHT controller 18 can be a programmable logic controller (PLC). The memory 26 can be, in some embodiments, a non-transitory machine-readable medium, such as random-access memory (RAM), read-only memory (ROM), electrically erasable programmable read-only memory (EEPROM), flash memory, a storage drive, an optical disc, or similar. The EHT controller 18 can also include a user interface (not shown) in some embodiments as well as one or more ports 30, such as serial communication ports, ethernet ports, or other ports, e.g., for connection to the management system 20.

Generally, EHT controllers 18 can include a core independent function: monitoring variables such as temperature, current, etc., controlling the EHT circuit, and generating alarms to alert a user of an alarm condition. Accordingly, EHT controllers 18, e.g., the corresponding processors 28 executing the management programs, can be configured to receive outputs from the one or more sensors 16, and can decide to perform one or more actions, such as energize heat trace cables 14, de-energize heat trace cables 14, or alert a user to a current or potential malfunction of the system 10, based on the outputs from the sensors 16. These alerts can be communicated to the user via the management system 20, as further described below.

More specifically, looking to the example of FIG. 1, the EHT controller 18 can be coupled to the sensors 16 in order to receive status values (e.g., temperature values, flow status values, or other pertinent values) relating to temperature, fluid flow, or other pertinent variables. The EHT controller 18 may be configured to store the status values from the sensors 16 in the memory 26 and communicate the status values to the management system 20.

Furthermore, the EHT controller 18 can be configured to selectively energize and de-energize the heat trace cables 14 based on the status values. For example, the EHT controller 18 may compare the status values to a number of thresholds for heat trace cable management as well as alarm management. Additionally, the EHT controller 18 can be configured to alert a user of a malfunction, or potential malfunction, of the EHT control system 10. For example, an EHT controller 18 can issue an alert when certain alarm conditions exist such as, but not limited to, a sensed temperature of the surface 12 becoming too low, a flow of the fluid within a pipe is too slow, or when a ground fault current along the EHT circuit becomes too high. At such time, the EHT controller 18 can sound an alarm, communicate an alarm flag to the management system 20, and/or shut off power to the heat trace cables 14.

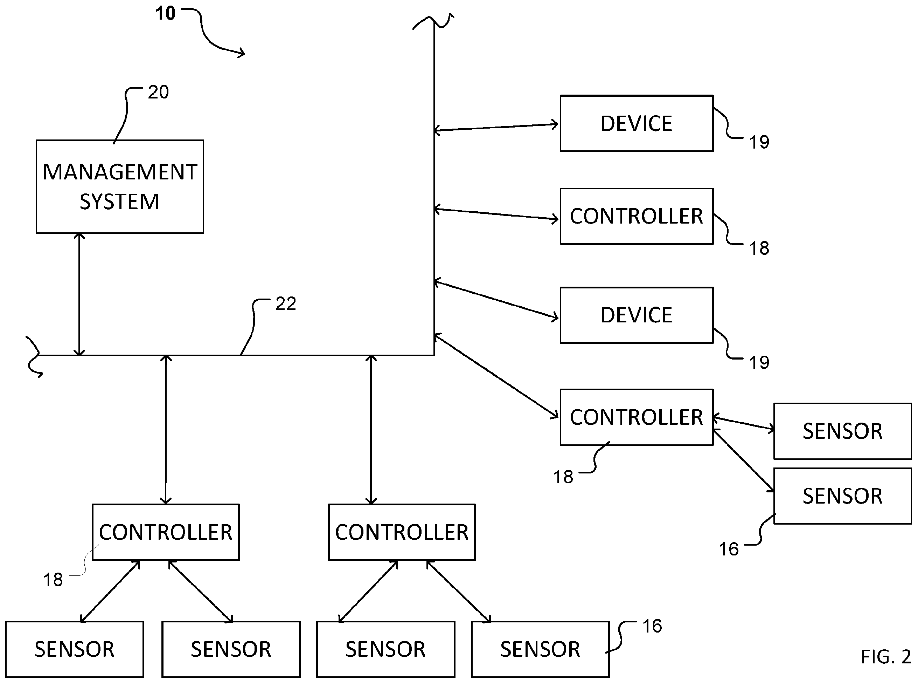

Referring back to FIG. 1, the management system 20 can include one or more ports 32, such as serial communication ports or ethernet ports, to enable the management system 20 to be coupled to the EHT controller 18 via a wired (e.g., RS-485 or ethernet) connection 22 and/or wireless connections 23. It should be noted that, while the following discussion will generally be referencing the wired connection 22 as an RS-485 line, any of the embodiments described herein are equally applicable to ethernet connections as the wired connection 22, or wireless connections 23, e.g., carrying Modbus protocol frames. Accordingly, the management system 20 can be coupled to a plurality of EHT controllers 18 along the RS-485 line 22, receiving status values, alarms, etc. in one centralized place for a user to monitor and/or control the system 10. For example, while the EHT controllers 18 may located be "in the field" generally near the surfaces 12 to be heated, the management system 20 may be a centralized supervisor system located in a control facility away from the surfaces 12. As another example, FIG. 2 illustrates an example system 10 including the management system 20 connected to a plurality of EHT controllers 18 and/or other devices 19 (e.g., other sensors, PLCs, programmable automation controllers (PACs), and/or actuators) along an RS-485 connection 22.

Referring back to FIG. 1, in some embodiments, the management system 20 can be a supervisory computing device, including memory 36 (a non-transitory machine-readable medium) storing data and/or instructions, a processor 34 that executes the instructions, and a user interface 38 that displays information to a user and/or receives inputs from the user. The management system 20 can also be in communication with the remote devices 24, which may also include user interfaces, allowing a user to remotely view information and/or provide inputs to the management system 20. For example, the management system 20 may communicate with the remote devices 24 via wired connections or wirelessly, e.g., over a network 25. Accordingly, information displayed to a user may be displayed at the management system 20 or at a remote device 24 in communication with the management system 20, and control inputs provided to the management system 20 may be provided directly at the management system 20 (e.g., via user inputs to the user interface 38, such as a keyboard) or via a remote device 24 in communication with the management system 20. Thus, the user interface 38 of the system 10 can be considered the user interface 38 of the management system 20 or of the remote device 24.

Generally, the management system 20 can include instructions stored in the memory 36 and carried out by the processor 34 to perform certain functions. For example, such instructions can include an application programming interface (API) for communicating with EHT controllers 18. For example, the API can include instructions for writing a desired configuration to the EHT controller 18, e.g., as provided by a user through the user interface 38, such as providing threshold values for alarm levels, providing threshold values for heat trace cable function, etc. It should be noted that, throughout the present disclosure, reference to the management system 20 performing certain actions can equate to the processor 34 of the management system 20 carrying out program instructions stored in the memory 36, such as executing the API or other stored program instructions. Furthermore, the management system 20, through the API, can also request data from the EHT controller 18, and the EHT controller 18 (through its processor 28 carrying out instructions stored in memory 26) can communicate data to the management system 20 in response to the data request. The management system 20 can check for alarm flags, request alarm data, and clear alarm flags, and the EHT controller 18 can correspondingly return alarm flags and return alarm data to the management system 20. The "alarm data" in this example can be the status values and/or other data after an alarm of the EHT controller 18 is tripped.

Accordingly, the management system 20 acts as a central parent device (e.g., a supervisor, master, or initiator) that interrogates child EHT controllers 18 (e.g., slaves or responders) periodically for information. Such communication is generally done via Modbus protocols over the RS-485 connection 22 (or, optionally, over the wireless connection 23). As discussed above, conventionally, the management system 20 maps all low-level registers of each particular EHT controller 18 in order to properly communicate with the EHT controller 18. That is, communications with a specific EHT controller 18 require the management system 20 to provide read or write instructions to specific registers with specific data in order to carry out requests. Each register has an assigned fixed function, conventionally listed in the Modbus register map of the device 18.

Instead of sequences of hundreds of low-level register manipulations to manage an EHT controller 18 at every turn (e.g., a conventional register map approach), some embodiments provide a command/response protocol that leverages the Modbus register map in a totally different way (e.g., a command/response approach). That is, rather than writing to particular registers for a particular EHT controller 18 based on how something should be done by the EHT controller 18, the management system 20 can write a universal, high-level command based on what it needs an EHT controller 18 to do. This can minimize or completely eliminate the need for the management system 20 to have and maintain a map of registers for each EHT controller 18 (e.g., based on type, vendor, firmware version, etc.) in order for the management system 20 to communicate with the EHT controllers 18. That is, according to some embodiments, device (e.g., controller)-specific details do not permeate beyond the data model (driver) layer. The management system 20 can be capable of communicating with any EHT controller 18 in a manner that is secure, efficient and robust, despite a slow and unreliable physical layer (e.g., RS-485 @ 9600 baud), while simultaneously remaining compatible with standard Modbus traffic.

Thus, some embodiments provide a Modbus command/response communications protocol between devices over an RS-485 line 22 (or a wireless connection 23). Such protocol can be enabled via APIs stored in both the management system 20 and the corresponding device 18, 19. For example, Modbus communication over RS-485 lines supports multi-register reads and writes in a single Modbus transaction, providing an efficient way to move bytes across the wire 22, since many bytes can move while incurring packet overhead only once. According to the command/response protocol of some embodiments, block reads and writes can operate on a vector of contiguous Modbus registers. More specifically, an array of contiguous registers in an EHT controller 18 (or other device 19) can be treated as a command input buffer, with commands communicated via a multi-register write function over those command registers, and a second array of contiguous registers in the EHT controller 18 (or other device 19) can be treated as a response buffer with responses communicated via a multi-register read function over those response registers.

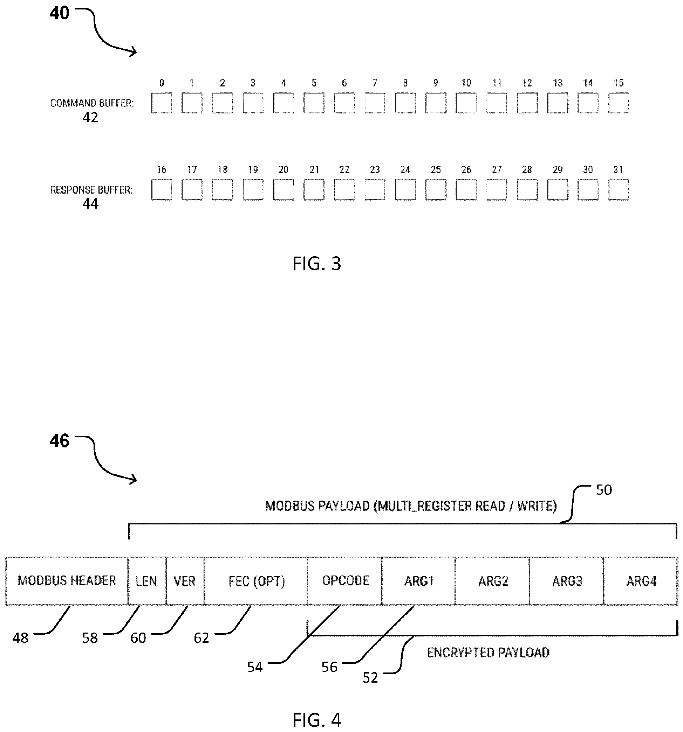

For example, FIG. 3 illustrates arrays of registers 40, i.e., Modbus address space, in a device, such as an EHT controller 18. As noted above, some devices can include hundreds of registers, or more. According to some embodiments, a first region of contiguous registers in the Modbus address space for the EHT controller 18 can be reserved to serve as a command buffer 42, analogous to a command line interface in a computer shell. The command buffer 42 can include a fixed maximum buffer length. In some implementations, the maximum buffer length can be 246 bytes (e.g., the Modbus limit for multi-write operations), though smaller or larger maximum buffer lengths can be used in other implementations.

Still referring to FIG. 3, another region of contiguous registers of the Modbus space 40 can be reserved for the corresponding response buffer 44. Both buffer regions 42, 44 can be located at fixed addresses across all devices. In the example shown in FIG. 3, the command buffer 42 includes registers 1-15 and the response buffer 44 includes registers 16-31. However, in some implementations, the register addresses can be chosen to be non-conflicting with existing active register addresses on any device type (e.g., perhaps in high address regions, as they may need to co-exist during a transition from a register map approach to the command/response approach). The command buffer 42 and the response buffer 44 can also contain more than 16 registers each, in some implementations. As a result, this data structure allows the management system 20 to interact with the devices 18, 19 in a completely different way while not breaking interoperability with other devices on the same wire 22 communicating via traditional Modbus protocols.

As noted above, rather than communicating how an EHT controller 18 or other device 19 should act (e.g., by writing to individual registers), the management system 20 can write a universal, high-level command based on what it needs an EHT controller 18 to do. Such a command could, thus, replace many Modbus register-level operations. By way example, such a command could be:

### > MODE MAINTAIN SETPOINT=50C DEADBAND=2C

Notably, the above command includes multiple variables. Under the traditional register map approach, the management system 20 would need to determine which registers for a particular EHT controller 18 are applicable to achieve this command, of which there would be multiple, create a Modbus packet including a write function to such registers, and send the Modbus packet on the wire 22. The above command, however, at such a high abstraction level, can replace those Modbus register level operations. Such commands can be easy for humans to interpret, both due to their higher level but also since it would not be necessary to constantly refer to Modbus maps of different devices to infer intent and consequence. Furthermore, due to the high abstraction level, text files could be used to script compound operations, lending to the ability for enhanced automation.

These high-level commands can result in a major reduction in wire traffic compared to register map approaches. For example, the same command could work across all EHT controllers 18. Indeed, multiple devices (and multiple EHT channels within each device) could be addressed by a single command using lists or bitmasks (e.g., the same command to be applied to multiple channels as indicated in a masked subset or list), resulting in potentially multiple orders of magnitude savings in wire traffic. Furthermore, the management system 20 no longer needs to track which firmware version is running on what device 18, 19, massively simplifying management system code and, further, firmware updates to an EHT controller 18 would not generally require updates to the management system 20.

Additionally, the command operation could be executed atomically from both the EHT controller and management system's perspective. More specifically, by way of example, the EHT controller 18 can receive a single command that may incorporate changes to multiple registers, as discussed above, and can interpret it and execute all necessary functions within the command locally. Only when the full command has been executed would a response be provided back to the management system 20. This is in contrast to a register-by-register execution from traditional Modbus packets.

Accordingly, the management system 20 can generate a command in the command buffer 42 (e.g., a multi-register write function to the registers of the command buffer 42) and send the command over the RS-485 line 22. A receiving EHT controller 18 can receive the command and can include its own API stored in the memory 26 configured to be executed by the processor 28 to process the command and act accordingly. Further, the API of the EHT controller 18 can compose a response in the response buffer 44 for a return message to be retrieved by the management system 20. The EHT controller 18 can then send the contents of the response buffer 44 back to the management system 20 in response to a command from the management system 20 for a block read function to the registers of the response buffer 44. For some commands, the response can be a one-byte acknowledgement of success or error when processing the command. For others, the response can also include data. By way of example, if the management system 20 is querying the instantaneous current flowing through a particular EHT channel, the command and resulting response may look like the following:
> CURRENT CHANNEL=7
< OK CURRENT=27

More specifically, the first line above is a command querying the current on EHT channel 7. This command can be communicated to the EHT controller 18 over the line 22 as a multi-register write into the registers associated with the command buffer 42. The EHT controller 18 can interpret the command from the command buffer 42, and query the particular channel of interest (e.g., without the command from the management system 20 needing to indicate the specific Modbus register of the EHT controller 18 associated with that particular channel). The second line is a response acknowledging the command and returning the current as 27 amps. That is, the EHT controller 18 can obtain the current from the particular channel, and write a response in the response buffer 44 acknowledging the command and providing specific response data, which can be communicated back to the management system 20 through a multi-register read of the registers associated with the response buffer 44.

Furthermore, some embodiments can implement tokenization to further simplify commands and responses. More specifically, keywords can be mapped to and from single- or multi-byte representations, and numeric values can be represented in binary form. However, for some commands/responses, text strings can still be spelled out character by character (e.g., such as when setting a remote device name). Accordingly, each device 18, 19 and the management system 20 can store such keywords in their respective memory 26, 36 for tokenizing messages.

By way of example, using the above command, CURRENT CHANNEL=7 could collapse to two bytes, { 0x14, 0x07 }, where 0x14 is a preset operation code for "read channel current," and 0x07 is the argument (i.e., channel 7). The response could also be two bytes, such as { 0x00, 0x1B }, where 0x00 is an "OK" error return code, and 0x1B is the data requested. As a more complicated example (e.g., more complicated from a register map command level), the following command could be encoded to just four bytes:
> MODE MAINTAIN SETPOINT=50C DEADBAND=2C CHANNELS=0x3F

For example, a first byte can provide the operation code (e.g., for "set mode maintain") and the second, third, and fourth bytes are related arguments (e.g., providing the setpoint magnitude, the deadband, and the applicable channels (e.g., via a channel mask)). Those four bytes could displace a great many raw register level writes, since the above command affects many channels simultaneously, as indicated by the channel bit mask (CHANNELS=0x3F), and changing thermostat modes could involve numerous setting changes for each of those channels.

Additionally, during the execution of such commands, the command/response model can give the embedded processor 28 the opportunity to validate and check the requested internal configuration. This can be easy to do for the firmware of the EHT controller 18 because it can trivially access its system state by reading local memory 26. More specifically, in the traditional register-map approach, this type of validation is not available as the EHT controller 18 only acts on individual registers as directed by the management system 20. However, under the command/response approach, for example, the EHT controller 18 has the ability to understand the entire command (e.g., the purpose of the command) and can validate that the entire command has been executed accordingly.

The internal structure and formatting of the command set and corresponding responses may be open-ended and developed on an application-by-application basis in some cases. However, in some implementations, the commands can take the form of operation codes optionally followed by fixed format parameters, the offset and correct interpretation and type (e.g., integer, floating point value, character etc.) of which can be unambiguously deduced just from the operation code. In this way, no syntactic parsing is necessary, keeping the computational overhead and error cases minimal at both the management system 20 and the EHT controller 18.

Using such tokenization, the software burden for both composing and interpreting commands or responses would be very low. Although the devices would "talk" in binary, commands could be composed from, and responses rendered back into, ASCII or structured markup languages for the purposes of simplifying coding and human-interpretation of supervisor/controller traffic. Additionally, in some implementations, formats such as XML or JSON could be applied as an alternative human and machine readable form.

Additionally, in some embodiments, the command and response payloads can be cryptographical protected, e.g., via cipher text. For example, through standards-based key exchange and cryptographic protocols, the payload can be protected and, also, the sender and receiver identities can be authenticated in a secure way for each command/response exchange.

Accordingly, FIG. 4 illustrates an example format of a Modbus packet 46 according to some embodiments. As shown in FIG. 4, a Modbus packet 46 can include a Modbus header 48 and a payload 50. The Modbus header 48 can include the corresponding device address, function code indicating transaction type (e.g., multi-register read or write), CRC (cyclic redundancy check), register addresses identifying the command buffer and/or the response buffer, and/or other fields. The payload 50 can be what is provided as the multi-register read/write instruction to the command buffer 42 or response buffer 44, i.e., encapsulating the command buffer 42 or the response buffer 44. More specifically, the payload 50 can include an encrypted payload portion 52, e.g., including tokenized operation code 54 and one or more corresponding arguments 56, as described above. The payload 50 can also include a length field (LEN) 58, a version field (VER) 60 (e.g., indicating API protocol version), and an optional Forward Error Correction (FEC) 62.

By way of example, a third-party device snooping all Modbus traffic would see that, instead of the former pattern of register reads and writes scattered across the hundreds of register addresses currently used to configure, monitor and control each device 18, 19, the Modbus packets 46 would now be multi-register accesses, and always to the same location (e.g., the registers associated with the command buffer 42 or the response buffer 44). Aside from the length field 58 and version field 60 that may fall outside of the encrypted region in some cases, the FEC field 62 (as further described below) and the encrypted payloads 52 would look like white noise. Indeed, repeated identical operations to the same device 18, 19 would effectively never generate the same packet 46 twice. Additionally, in some implementations, all Modbus payloads 50 can conform to a standard length, eliminating the need for the length field 58. Using this encryption method would make it difficult for a third party to reverse engineer how to interoperate with a corresponding device 18, 19 just by watching the traffic along the line 22.

Referring still to FIG. 4, in some implementations, the Forward Error Correction (FEC) field 62 can be implemented to partially mitigate against poor line conditions. For each chunk of data to be sent, additional data is calculated and sent alongside it inside the packet 46. The FEC data can be used to reliably detect whether a communication error has occurred during transmission and, for damaged data fields, possibly enable a repair to the data in place. For example, the amount of damage the packet 46 can sustain and still be repaired can be configurable, with the trade-off being that more damage resilience would result in larger FEC fields 62.

Modbus packets 46 can also natively include a Cyclic Redundancy Check (CRC) field (e.g., within the Modbus header 48), designed to allow the receiver to determine if a recently arrived packet 46 has suffered any data corruption. Currently, in the event of a CRC fail, the target device 18, 19 is simply required to ignore the damaged packet 46. There is no negative acknowledge (NACK) signal back to the initiator (e.g., the management system 20). This uncertainty complicates the communication process, and timeouts followed by retries are generally used to detect and correct such issues. To help mitigate such issues, long multi-read packets can be broken up into smaller chunks which, statistically, have a better chance of getting through. However, this solution can waste bandwidth and complicate the process for both ends. On the other hand, error correction may not be necessary, for example, on lines with good signal quality or for small packets where only a few bytes of payload are involved. In these situations, the additional FEC data only serves to lengthen the packet 46.

Accordingly, in some implementations, the FEC field 62 can be optional and added as needed during system operation. For example, by adjusting the packet version byte 60, the packet 46 can indicate whether part of the payload is a FEC field 62. This gives the option to have the management system 20 start with no FEC (thus, smaller packets and higher performance) and dynamically apply progressively stronger FEC support until communication problems are controlled. In noisy environments, this can lower packet loss and increase aggregate throughput performance. Accordingly, sub-fields in the packet version field 60 can indicate not only protocol version, but also what FEC (if any) was used in the payload encoding.

Furthermore, in some embodiments, an optional set of "public" register address regions can be implemented. That is, in addition to the command and response buffers 42, 44 described above, which may be written to and read from, respectively, via encrypted payloads, a public register space (e.g., a "public buffer") may be designated for conventional Modbus register accesses that would be accessible without requiring encryption. Such instances where public regions may be accessed may be, for example, reading emergency alarm flags or read-only requests for benign status information (e.g., on/off statuses, etc.).

While Modbus is primarily a wired protocol, as noted above as illustrated in FIG. 2, the EHT controller 18 and the management system 20 can communicate via wireless communication methods 23, such a through WiFi (e.g., local area networks, mesh WiFi networks, wide area networks, etc.), Wi-SUN, Bluetooth^{®}, Zigbee, or other methods. The command/response protocol herein can be considered a protocol network transport agnostic scheme. That is, the packets 46 used and described herein can be delivered along the line 22 or via wireless communication 23. Thus, any discussion herein of packets 46 or other aspects of the command/response protocol being transmitted along the wired line 22 can equally apply to wireless transmissions.

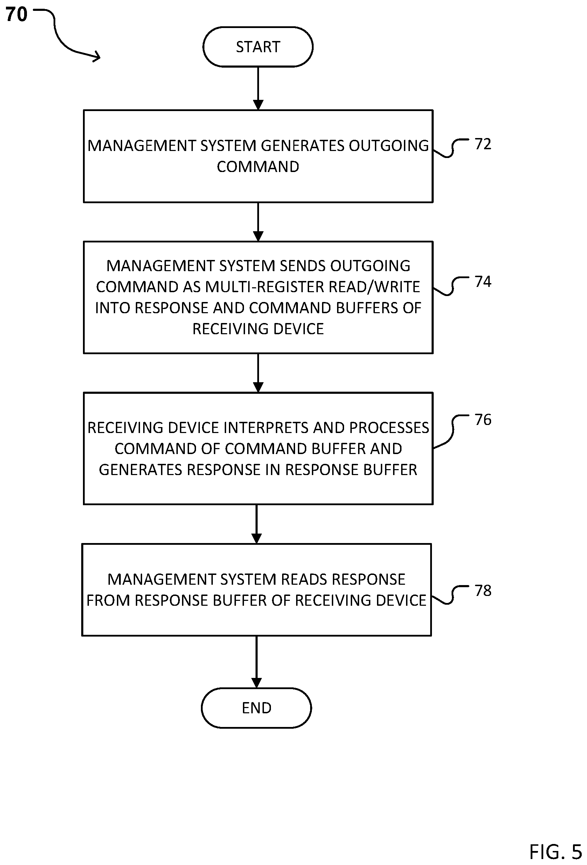

In light of the above, FIG. 5 illustrates an example method 70 of a command/response protocol according to some embodiments. The steps of the method 70 can be carried out by the management system 20 and/or the EHT controller 18 (or other device 19), as indicated below. Additionally, any or all of these steps can be stored as computer readable instructions on a memory of the corresponding device 18, 19, 20, such as part of an API or other program instructions. Furthermore, while the steps are illustrated and described in a particular order, in some implementations, certain steps may be executed concurrently or in a different order than what is shown.

As shown in FIG. 5, generally, the method 70 can include the management system 20 generating an outgoing command (step 72) and sending the outgoing command as a Modbus packet 46 comprising a multi-register read/write, writing into a command buffer 42, and reading from a response buffer 44 of a receiving device, such as an EHT controller 18 (step 74). The receiving device 18 can interpret and process the command, and write a response into the response buffer 44 (step 76). The management system 20 can then read the contents of the response buffer 44 (step 78).

More specifically, at step 72, the management system 20 can generate an outgoing command. The command can correspond to a request for a particular device 18, 19 to perform an action. For example, the command can be a request for information from a particular device 18, 19, a configuration change for a particular device 18, 19, etc. Alternatively, the command can be a broadcast to all devices 18, 19 on the line 22, requesting all devices 18, 19 to perform an action. Such commands can be automatically generated from a scheduler and/or can be generated in response to user input via the user interface 38 or remote device 24.

At step 74, the management system 20 can send the outgoing command, via the bus 22, as a Modbus packet 46 comprising a multi-register ("block") read/write, e.g., a write into a command buffer 42 of a receiving device 18, 19 (or all devices 18, 19 for a broadcast), as well as a read from the response buffer 44 of the device 18. That is, as described above and illustrated in FIG. 4, the Modbus packet 46 can include a Modbus header 48 with the target device information, a Modbus payload 50 including a length field 58, a version field 60, an optional forward error correction field 62, and an encrypted payload portion 52 including an operation code 54 and one or more arguments 56. Additionally, as discussed above, the operation code 54 and/or arguments 56 may be text strings or may be tokenized, e.g., by mapping keywords of the request to single byte tokens. Notably, because the command is a high-level command rather than a register map-based command that must be specific to the receiving device, the same command can be used across all devices 18, 19 in the system 10. And local firmware in the devices 18, 19 can variously interpret a common command set according to their local architectures. Furthermore, as noted above, in some embodiments, the management system 20 can encrypt some or all of the contents of the payload 52 (e.g., including the block write command and the block read command) into ciphertext.

At step 76, the receiving device 18, 19 can receive the Modbus packet 46 on the bus 22, write to the command buffer 42 and, in turn, interpret and process the command from the command buffer 42. For example, the receiving device 18, 19 can update thresholds or other configuration parameters, turn on/off specific coils, obtain relevant status values or other information, etc. Such changes may affect multiple registers not specifically identified by the management system 20 or the command, but mapped from the device-side based on the command. That is, the processor 28 of the device 18, 19 can execute instructions in memory 26 to interpret and process the command by mapping the request to specific registers of the device 18, 19 (e.g., outside of those registers associated with the command buffer 42 and the response buffer 44) and carrying out actions on those registers. Such processing and interpretation can further include, for example, mapping single byte tokens within the data within the command buffer to keywords associated with the request (e.g., stored in memory 26), reading a macro in the command, and obtaining, from memory 26, a list of requests associated with the macro to perform multiple actions, among other processing actions. The processor 28 of the device 18, 19 may also decrypt the payload 50 from ciphertext into plaintext as part of this processing.

Furthermore, at step 76, the receiving device 18, 19 can generate a response. As described above, in some situations, a response may be a simple acknowledgement of the command (e.g., indicating success or error when processing the command). In other situations, the response may include an acknowledgement of the command and/or requested information, such as requested status values, alarm flags, etc. Data associated with the response can be generated within (e.g., written into) the response buffer 44 of the device 18, 19. In some embodiments, the generated response to the management system 20 can be encrypted, as described above.

At step 78, the management system 20 can receive the response by reading the contents of the response buffer 44, as part of the read/write command discussed above in step 74, and process the contents of the response buffer 44 to obtain the requested data.

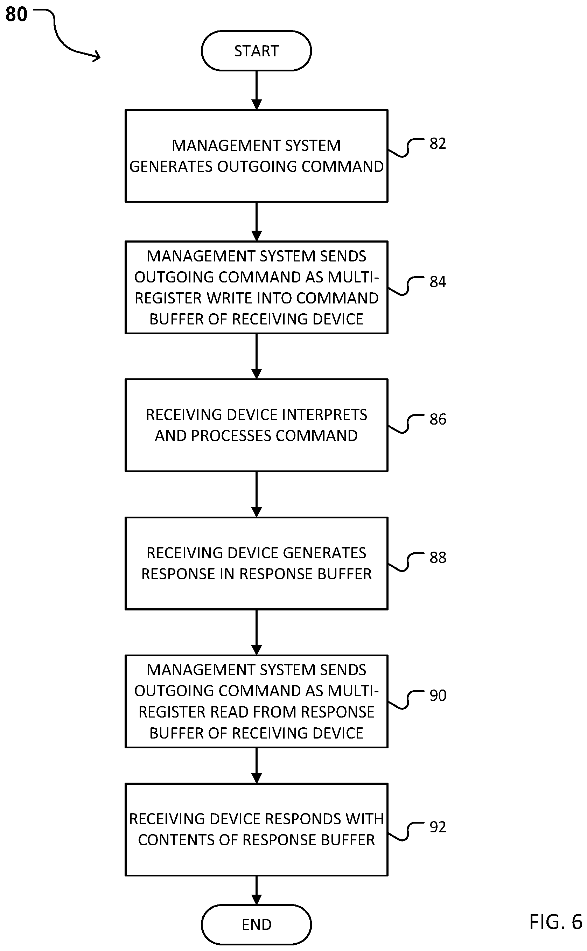

FIG. 6 illustrates another example method 80 of a command/response protocol according to some embodiments. The steps of the method 80 can be carried out by the management system 20 and/or the EHT controller 18 (or other device 19), as indicated below. Additionally, any or all of these steps can be stored as computer readable instructions on a memory of the corresponding device 18, 19, 20, such as part of an API or other program instructions. Furthermore, while the steps are illustrated and described in a particular order, in some implementations, certain steps may be executed concurrently or in a different order than what is shown.

As shown in FIG. 6, generally, the method 80 can include the management system 20 generating an outgoing command (step 82) and sending the outgoing command as a Modbus packet 46 comprising a multi-register write into a command buffer 42 of a receiving device, such as an EHT controller 18 (step 84). The receiving device 18 can interpret and process the command (step 86) and write a response into the response buffer 44 (step 88). The management system 20 can send another outgoing command as a Modbus packet 46 comprising a multi-register read from the command buffer 42 of the receiving device (step 90) and the receiving device can respond with the contents of its response buffer (step 92). Accordingly, in contrast to the method 70 of FIG. 5, which provides a single-step read/write process to send commands and receive corresponding responses, the method 80 of FIG. 6 can split this into a two-step process of writing a command, then requesting a response.

More specifically, at step 82, the management system 20 can generate an outgoing command. The command can be a request for information from a particular device 18, 19, a configuration change for a particular device 18, 19, etc. Alternatively, the command can be a broadcast to all devices 18, 19 on the line 22. Such commands can be automatically generated from a scheduler and/or can be generated in response to user input via the user interface 38 or remote device 24.

At step 84, the management system 20 can send the outgoing command, via the bus 22, as a Modbus packet 46 comprising a multi-register write into a command buffer 42 of a receiving device 18, 19 (or all devices 18, 19 for a broadcast). That is, as described above and illustrated in FIG. 4, the Modbus packet 46 can include a Modbus header 48 with the target device information, a Modbus payload 50 including a length field 58, a version field 60, an optional forward error correction field 62, and an encrypted payload portion 52 including an operation code 54 and one or more arguments 56. Additionally, as discussed above, the operation code 54 and/or arguments 56 may be text strings or may be tokenized. Notably, because the command is a high-level command rather than a register map-based command that must be specific to the receiving device, the same command can be used across all devices 18, 19 in the system 10. And local firmware in the devices 18, 19 can variously interpret a common command set according to their local architectures.

At step 86, the receiving device 18, 19 can receive the Modbus packet 46 on the bus 22, write to the command buffer 42 and, in turn, interpret and process the command. For example, the receiving device 18, 19 can update thresholds or other configuration parameters, turn on/off specific coils, obtain relevant status values or other information, etc. Such changes may affect multiple registers not specifically identified by the management system 20 or the command, but mapped from the device-side based on the command.

At step 88, the receiving device 18, 19 can generate a response. As described above, in some situations, a response may be a simple acknowledgement of the command (e.g., indicating success or error when processing the command). In other situations, the response may include an acknowledgement of the command and/or requested information, such as requested status values, alarm flags, etc. The response can be generated within the response buffer 44 of the device 18, 19.

At step 90, the management system 20 can send an outgoing command, via the bus 22, as a Modbus packet 46 comprising a multi-register read from the command buffer 42 of the receiving device 18, 19. In some instances, the management system 20 may send the second "read" command from the response buffer 44 immediately after sending the first "write" command to the command buffer 42.

At step 92, the receiving device 18, 19 can respond to the read command by transmitting, back to the management system 20 over the line 22, the contents of the response buffer 44. This response can then be received by the management system 20 and processed to obtain the requested data.

Referring back to FIG. 2, a system 10 can include many EHT controllers 18 and/or other devices 19 in communication with the management system 20 over a shared connection 22. With traditional Modbus communication, there is no command queue. For example, the bus 22 may be fully occupied during outgoing command packet transmission, the turn-around response time of the target device 18, 19, and the incoming response transmission. This can take a considerable amount of time, which is dead time as far as all other devices 18, 19 are concerned. According to some embodiments, an asynchronous communications method can be provided to allow many devices 18, 19 to concurrently process (temporarily overlapping) command/response transactions.

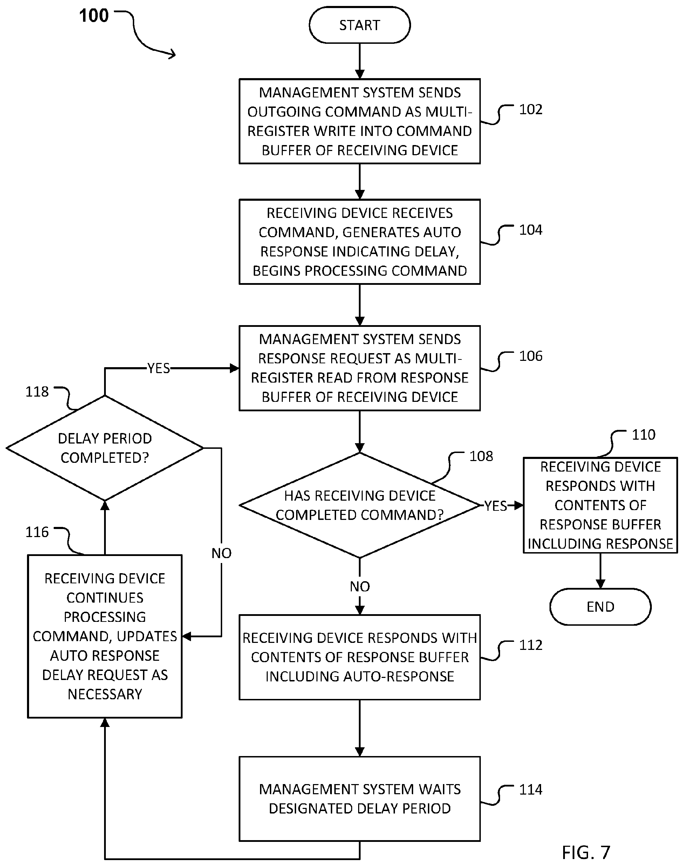

More specifically, FIG. 7 illustrates an asynchronous communications method 100 according to some embodiments. Additionally, any or all of these steps can be stored as computer readable instructions on a memory of the corresponding device, such as part of an API or other program instructions. Furthermore, while the steps are illustrated and described in a particular order, in some implementations, certain steps may be executed concurrently or in a different order than what is shown.

As shown in FIG. 7, generally, the method 100 can include the management system 20 sending an outgoing multi-register read/write command as a Modbus packet 46 comprising a multi-register write into a command buffer 42 of a receiving device 18, 19 and a multi-register read from a response buffer 44 of the receiving device (step 102). The receiving device 18, 19 can receive the command, begin processing the command, and generate an automated response in its response buffer 44 that the response is not immediately available, with a suggested delay before retrying (step 104). Following this delay, the management system 20 can send a second outgoing command as a Modbus packet 46 comprising a multi-register read from the response buffer 44 of the receiving device 18, 19 (step 106). If the receiving device 18 has completed the initial command (i.e., "YES" at step 108), the receiving device 18 responds to the second command with a response from the response buffer 44 containing the requested data and/or acknowledging the initial command (step 110). If the receiving device 18 has not completed the initial command (i.e., "NO" at step 108), the receiving device 18, 19 responds to the second command with a response from the response buffer 44 containing the automated response with a designated delay (step 112). The management system 20 then again waits for the designated delay time (step 114) while the receiving device 18, 19 continues processing the command and, optionally, determines an updated delay time in the automated response to be added to the response buffer 44 (step 116). If the original delay time has expired (i.e., "YES" at step 118), the management system 20 reverts back to step 106 and again sends a response request command.

More specifically, at step 102, management system 20 can send an outgoing command as a Modbus packet 46 comprising a multi-register read/write command, with a command written into a command buffer 42 of a receiving device 18, 19 and a read from the response buffer 44 of the receiving device. This may be similar to step 74 described above with respect to the method 70 of FIG. 5.

At step 104, the receiving device 18, 19 can receive the command, begin processing the command, and generate an automated response in its response buffer 44 that the response is not immediately available, with a suggested delay before retrying, which can be read by the management system 20. For example, at the moment the receiving device 18, 19 receives the incoming command, its response buffer 44 can already be pre-loaded with a short message indicating that the response will not be available immediately, and includes a suggested default delay before retrying. The receiving device 18, 19 also immediately busies itself with processing the command. Additionally, if the receiving device 18, 19 can determine an estimated processing time that is significantly different from the default delay in the pre-loaded response, the receiving device 18, 19 can optionally refine the estimate in the response buffer 44.

At this same time, the receiving device 18, 19 can begin preparing a response message to be sent via the response buffer 44. In some implementations, such changes to the response buffer 44 can be achieved atomically using double buffering, e.g., so a receiving device 18, 19 is never caught mid-edit of the response buffer 44. More specifically, the receiving device 18, 19 can include a first, "active" response buffer 44 with the automated response while it prepares a second, "inactive" response buffer 44 with the requested response. When the requested response is completed, the receiving device 18 can make that second, inactive response buffer the "active" response buffer 44, while inactivating the first response buffer 44 with the automated response. Thus, when the command has been fully processed, the response buffer 44 is appropriately prepared for the management system 20.

Referring still to FIG. 6, at step 106, the management system 20 can send a second outgoing command as a Modbus packet 46 comprising a multi-register read from the response buffer 44 of the receiving device 18, 19. This may be similar to step 90 described above with respect to the method 80 of FIG. 6. In some instances, the management system 20 can send the second outgoing "read" command immediately after the first outgoing "read/write" command in step 102. In other instances, the management system 20 can send the second outgoing "read" command after a delay from the first outgoing "read/write" command in step 102, e.g., based on a delay indicated in the initial response from the device 18.

If the receiving device 18 has completed the initial command (i.e., "YES" at step 108), the receiving device 18 responds to the second command with a response from the response buffer 44 containing the requested data and/or acknowledging the initial command at step 110. That is, the receiving device 18 has activated the response buffer 44 with the completed request and can allow the management system 20 to read the response buffer 44, containing the response to the initial command from step 102. The communication is then completed as the management system 20 has received the acknowledgement, error message, or requested data in response to the initial command.

On the other hand, if the receiving device 18 has not completed the initial command (i.e., "NO" at step 108), the receiving device 18, 19 responds to the second command with a response from the response buffer 44 containing the automated response with the designated delay at step 112. That is, the receiving device 18 has activated the response buffer 44 with the automated response, including the default or updated delay time, which can be read by the management system 20.

At step 114, the management system 20 then waits the designated delay time. At step 116, the receiving device 18, 19 continues processing the command and, optionally, determines an updated delay time in the automated response to be added to the response buffer 44. At this time, the receiving device 18 has still activated the response buffer 44 with the automated response, including the default or updated delay time, until the inactivated response buffer 44 with the actual response is completed.

If the original delay time has expired (i.e., "YES" at step 118), the management system 20 reverts back to step 106 and again sends a response request command as a re-attempt to extract the requested response. The cycle of steps 106, 108, 112, 114, 116, and 118 can be repeated in a loop until the receiving device 18, 19 has completed the command (i.e., "YES" at step 108).

Thus, using the above method 100, the management system 20 would either immediately obtain a response from the device 18, 19, or would receive a message indicating a minimum suggested wait time before the management system 20 should attempt to read the response again. In some implementations, devices 18, 19 can be polled round-robin style to read their status flags to determine if further processing is required. In the asynchronous command response scheme 100 shown in FIG. 7, the management system 20 can have a list of all target devices 18, 19, e.g., stored in a table in memory 36. A scheduler of the management system 20 (e.g., executed by the processor 34) can determine the next device 18, 19 to be polled, where the table entry for each device 18, 19 can be in one of two states: "command pending" or "no command pending."

Devices 18, 19 with a "command pending" status are not accessed until the time delay indicated in their respective automated response has expired, as there is no value in bothering the device 18, 19 if it is not expected to have completed its command processing. However, devices 18, 19 without a "command pending" status can be polled in a cyclic fashion to check for exogenous events such as, for example, alarm conditions, or to collect routine sensor data for trending. Accordingly, with a suitably crafted scheduler, command responses can be collected shortly after they are available (e.g., after the designated timer expires) and, in the meantime, devices 18, 19 with no pending commands can be polled more frequently than would otherwise have been the case since the "command pending" devices 18, 19 would not participate in the round robin scheduling until their timers expire.

Accordingly, the above method 100 thus allows commands to complete asynchronously and, as a result, the Modbus line 22 is available for other device interactions between the command transmission and response reception. Many commands can be in flight at any instant, unlocking the opportunity for parallel processing and potentially significantly reducing the time to overall completion. By way of example, complex compound commands received by a single multi-channel device 18, 19, such as instances where the device 18, 19 needs to be initialized, reconfigured, or receive firmware updates, could take a very long time to process. Using the above method 100, that processing time would no longer be dead time on the line 22 and, further, the management system 20 would not bother the device 18, 19 with an inquiry on its status until the designated delay time has expired. The larger the number of devices 18, 19 in a system 10 sharing a Modbus segment 22 only increases the positive effects of the above methods 70, 80, 100. As another example, the management system 20 could send a broadcast command to write to the communication buffer of all devices 18, 19, and the management system 20 could immediately begin querying each device 18, 19 independently for its response, giving the devices 18, 19 time to generate their responses without tying up the line 22.

As noted above, and referring back to FIG. 4, in some embodiments, devices 18, 19 can include the response buffer 44 comprising a set number of consecutive registers, and the management system 20 can transmit a Modbus packet 46 comprising a multi-register read from the response buffer 44 (i.e., of those corresponding registers) of the receiving device 18, 19. Alternatively, in some embodiments, to further improve communication efficiency, a MODBUS FIFO (first in, first out) read queue function can be used to receive a variable-length vector of register reads up to thirty one registers long.

In some embodiments, to further reduce wire traffic and simplify code from the perspective of the management system 20, embedded macros can be used in the command/response messaging scheme. For example, during operations such as initialization, large-scale configuration changes, and shutdowns, long sequences of operations must be applied to all devices 18, 19 on the bus 22. High level command/response schemes, as described above, can, on their own, significantly reduce the number of transactions required on the wire 22. Additionally using macros could take these numbers down even further by allowing the target devices 18, 19 to store named or numbered command sequences, e.g., downloaded from the management system 20.

By way of example, a simple macro can take the form of a named list of commands that are stored in the memory 26 of the device 18, 19. Once stored in each device 18, 19, special commands from the management system 20 could call them, at which point the device 18, 19 executes the commands and performs corresponding actions, in turn, automatically. Additionally, in some embodiments, in the event that a command generates an error response, execution could be suspended and the response back to the management system 20 could include a record indicating the nature of the error and where it occurred during macro execution. Alternatively, to avoid handling partial execution of a large macro in the event of an error, the macro system of the device 18, 19 could dry-run a macro to completion to check for errors before starting to commit changes. This way, the error would be flagged before any changes had been attempted. Furthermore, in some applications, an initial response from a device 18, 19 can provide a checksum or hashed signature to confirm that the device 18, 19 and the management system 20 have the same macro stored. Such additional exchange would prevent execution of macros that have been changed on one side.

In some applications, the management system 20 can use a macro command to supply input parameters adapted for different situations. For example, a macro 'setpoint' could set up all EHT channels with a particular thermal set point passed as a command parameter when the macro is invoked. That is, the command includes the macro along with the set point parameter. As another example, the management system 20 can use a macro command to upload preset system states, allowing entire compound devices 18, 19 (e.g., multiple channels on the device 18, 19, or multiple sets of channels) to be switched to a new pre-recorded preset configuration state with a single command from the management system 20. In view of these examples, not only could macros further reduce the number of transactions on the wire 22, using macros could also reduce the size of such transactions.

As noted above, in some instances, the management system 20 can broadcast a write command into the command buffers 42 of all devices 18, 19 along the line. However, generally, the Modbus broadcast function cannot be selective. That is, the management system 20 can either address a single device 18, 19 or all devices 18, 19 (Modbus RTU supports unicast packets addressing a specific target node, or broadcast packets addressing all node.) and cannot address a select group of devices 18, 19. Furthermore, broadcast generally only applies to populations of target devices that all support the same register maps. Indeed, if some devices 18, 19 on the line 22 are still only able to communicate through traditional Modbus communications, a broadcast to the registers of those devices 18, 19 that are associated with a command buffer 42 would not result in the devices 18, 19 taking any actions.

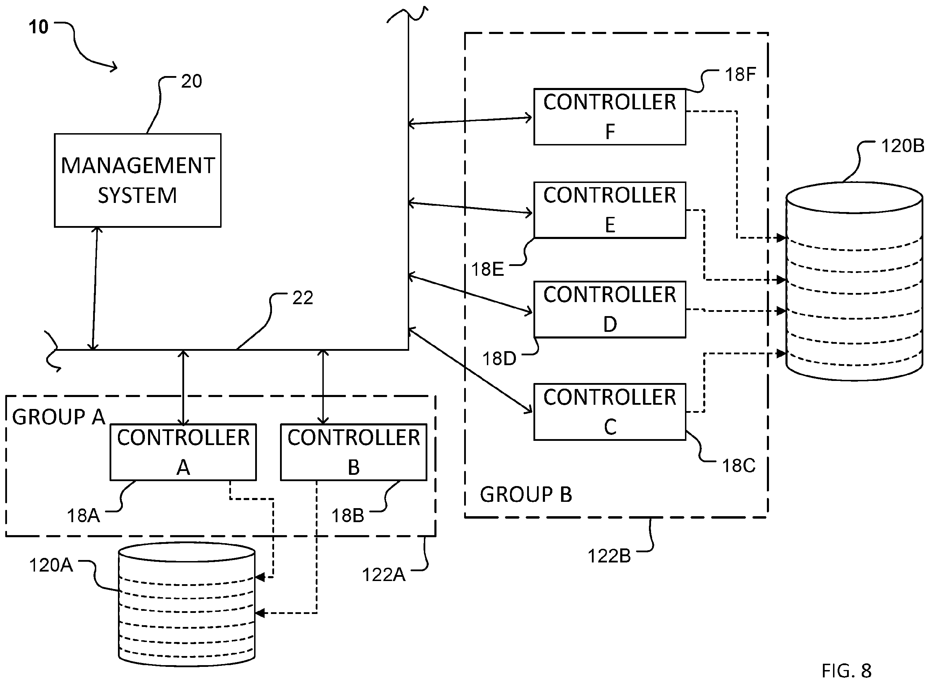

For example, referring now to FIG. 8, an EHT control system 10 is illustrated, comprising a plurality of EHT controllers 18 (i.e., controllers 18A-18F). These controllers 18A-18F may be associated with EHT circuits for heating certain structures, such as storage tanks 120A, 120B (or pipes or other surfaces). More specifically, controllers 18A-18B may be associated with EHT circuits for heating storage tank 120A, while controllers 18C-18F may be associated with EHT circuits for heating storage tank 120B. If a user desired to provide updates to all EHT circuits associated with storage tank 120A, e.g., if the heating requirements of the structure 120A were to change, it would be desirable to be able to address all controllers 18C-18F associated with the structure 120A using a single command. However, using current protocols, the management system 20 would need to individually send commands to each of controllers 18C-18F to accomplish such updates. A broadcast command would not be sufficient as not all controllers (such as controllers 18A, 18B) require such an update.

Accordingly, in some embodiments, the command/response protocols herein can be adapted for selective broadcasting to a select group of devices 18, 19 along the line 22. That is, it would be desirable to be able to address a subset of all devices 18, 19 sharing a Modbus channel 22 and, according to some embodiments, this can be supported using label-based addressing in which a field in the data payload 50 of a command packet 46 allows each target device 18, 19 to determine if the incoming packet applies to it. More specifically, as described above with respect to FIG. 4, the Modbus header 48 of a packet 46 can include a corresponding device address and register addresses identifying the command buffer and/or the response buffer, among other fields. Rather than inserting an actual device identifier in the device address field of the Modbus header 48, the management system 20 can use a "dummy address" in the device address field and implement an addressing mechanism within the Modbus payload 50 itself. And the devices 18, 19 can be configured to "ignore" the device address field, that is, can be configured to respond to requests regardless of the identifier specified in the Modbus header 48. Through processing the contents of the command buffer 42, each device 18, 19 can use the addressing mechanism within the command to determine whether to actually carry out the request. If the addressing mechanism within the command buffer 42 indicates that the request is not intended for that particular device 18, 19, the device 18, 19 does not carry out the request. For example, the device 18, 19 can simply "do nothing" or can register a response in the response buffer 44 acknowledging receipt of the packet 46, but not carry out the actual commands within the request.

In some embodiments, the addressing mechanism, e.g., a special purpose field in the payload 50 of the command packet 46, can simply include the device identifier of the intended device 18, 19, e.g., a number between 0 and 255. For example, a command of "> CURRENT CHANNEL=7" may switch to "> DEVICE=6 CURRENT CHANNEL=7." Thus, the command queries the current on EHT channel 7 on Device 6, e.g., controller 18F in the example system 10 of FIG. 8. Thus, all controllers 18A-18F can receive and process a packet 46 comprising the command, though only controller 18F will query the current on EHT channel 7 and write a relevant response with the current from EHT channel 7 into its response buffer 44. All other controllers 18A-18E will read the command, determine that the request is not meant for them, and not further process the request.

In further embodiments, the addressing mechanism can include a group identifier that identifies a group of devices 18, 19. For example, each device 18, 19 can store within its respective memory 26 particular group identifiers of groups that it may be associated with, and the management system 20 can store within its memory 36 particular group identifiers and lists of controllers 18 associated with the respective group identifiers. Such groups can be e.g., location-based, task-based, or grouped based on other variables. Looking to the example system 10 of FIG. 8, controllers 18A, 18B can be associated with a "Group A" 122A corresponding to EHT circuits of storage tank 120A, and controllers 18C-18F can be associated with a "Group B" 122B corresponding to EHT circuits of storage tank 120B. Using this example, the management system 20 may want to update all controllers 18C-18F associated with the storage tank 120B. Thus, the management system 20 can include, in the addressing mechanism of the command, a group identifier for Group B 122B and the corresponding request. All controllers 18A-18F can receive and process a packet 46 comprising the command, though only the controllers 18C-18F will carry out the request. All other controllers 18A, 18B will read the command, determine that the request is not meant for them (i.e., they are not part of the group identified), and not further process the request.

According to a further example, in some embodiments, the management system 20 can apply filtering operations based on labels or current state Boolean flags to determines a sub-population of devices 18, 19 that need to be addressed by a command. The special purpose field (addressing mechanism) in the command packet 46 can express this sub-population by various means, e.g., with the goal of consuming as few bytes as possible. For example, an addressing mode register can first be used to denote which addressing mode is being used. Possible values for this register can include, for example "single target immediate," "list," "sparse bitmap," or "full bitmap," among other options. The single target immediate mode can be used when a single device 18, 19 is to be targeted, whose unique ID follows immediately behind the mode register. The list mode can comprise a byte indicating how many devices 18, 19 are listed, followed by a simple list of said devices 18, 19. The sparse bitmap addressing scheme can include a compressed bitmap field following the mode register, in which a subset of the possible population of target devices 18, 19 are identified. For example, sparse bitmap encoding can reduce the number of bytes required to express a generally small subset of the total number of addressable target devices 18, 19. Sparce bitmap addressing mode can be an efficient way to simultaneously address larger numbers of target devices 18, 19 that would comprise a rather long list. Additionally, the full bitmap mode can simply express the entire address mask (32 bytes = 256 bits), and may be the most efficient way of addressing multicast subsets when a very high number of possible devices 18, 19 are targeted. Other addressing schemes may also be employed. Using these addressing schemes, the management system 20 can use encoding that uses the smallest number of header bytes.

In this manner, one way or another, a bitfield is included in the broadcast packet 46 that allows each potential target device 18, 19 to determine if the packet 46 is intended for it. To avoid errors caused by overwriting registers in unintended targets, the actual Modbus address (e.g., in the Modbus header 48) for such an outgoing command packet 46 can refer to an unoccupied slot in the Modbus device address space. Every device 18, 19 receives and starts to decode every command packet 46. By moving the addressing logic away from Modbus and into the described communication protocol's domain, efficiency and network-transport agnosticism are achieved.

That is, using this selective broadcast method, with the addressing mechanism included the payload 50, the devices 18, 19 themselves become responsible for determining who handles commands, rather than simply acting upon direct commands from the management system 20. Furthermore, by including a group addressing mechanism, that is, by selective broadcasting to groups of devices 18, 19, traffic on the wire can be significantly reduced. Using the above example, rather than addressing all four controllers 18C-18F of group B 122B in turn, the management system 20 can output a single command to address all controllers 18C-18F of the group 122B.

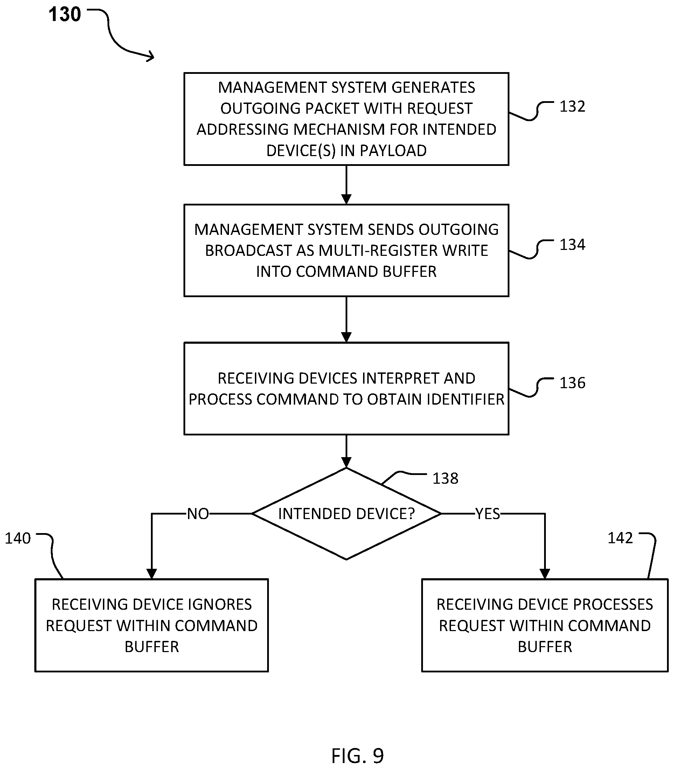

In view of the above, FIG. 9 illustrates another example method 130 of a command/response protocol according to some embodiments. The steps of the method 130 can be carried out by the management system 20 and/or the EHT controller 18 (or other device 19), as indicated below. Additionally, any or all of these steps can be stored as computer readable instructions on a memory of the corresponding device 18, 19, 20, such as part of an API or other program instructions. Furthermore, while the steps are illustrated and described in a particular order, in some implementations, certain steps may be executed concurrently or in a different order than what is shown.

As shown in FIG. 9, generally, the method 130 can include the management system 20 generating a Modbus packet 46 including a command within the payload 50 of the packet 46 incorporating a request as well as an addressing mechanism (step 132) and sending the Modbus packet 46, e.g., as a multi-register write command, along the line 22 (step 134). All receiving devices 18, 19 can interpret and process the command to obtain the target device(s) within the addressing mechanism (step 136). If a device 18, 19 determines the addressing mechanism does not identify it (i.e., NO at step 138), the device 18, 19 ignores the request within the command (step 140). If a device 18, 19 determines the addressing mechanism does identify it (i.e., YES at step 138), the device 18, 19 further processes request (step 142).

More specifically, at step 132, the management system 20 can generate a Modbus packet 46 including a command within the payload 50 of the packet 46 incorporating a request as well as an addressing mechanism. As noted above, the addressing mechanism can address a single device 18, 19 or a group of devices 18, 19.

At step 134, the management system 20 can send the outgoing command via the bus 22, e.g., as a Modbus packet 46 comprising a multi-register write into a command buffer 42 of receiving devices 18, 19 along the bus 22. For example, in the Modbus header 48, the device identifier field can include a "dummy" device address, e.g., a device address associated with a non-existent device on the line 22. As such, any device 18, 19 that incorporates traditional Modbus protocols can ignore the packet 46 as it considers the packet 46 to be addressed to a different device 18, 19 (e.g., in comparison to using a broadcast address, in which the traditional device 18, 19 would attempt to carry out the command).

At step 136, the receiving devices 18, 19 (e.g., devices 18, 19 configured to use command/response protocols) can receive the Modbus packet 46 on the bus 22, write to the respective command buffer 42 and, in turn, interpret and start processing the command from the command buffer 42 to obtain the identifier within the addressing mechanism. If a device 18, 19 determines the addressing mechanism does not identify it (i.e., NO at step 138), the device 18, 19 ignores the request within the command (step 140). If a device 18, 19 determines the addressing mechanism does identify it (i.e., YES at step 138), the device 18, 19 further processes the request (step 142).

In some embodiments, following this selective broadcast, the management system 20 can individually query each device 18, 19 that was expected to be addressed by the command for responses. For example, the management system 20 can sequentially query each device 18, 19 for a response to the issued selective broadcast command to gather responses.

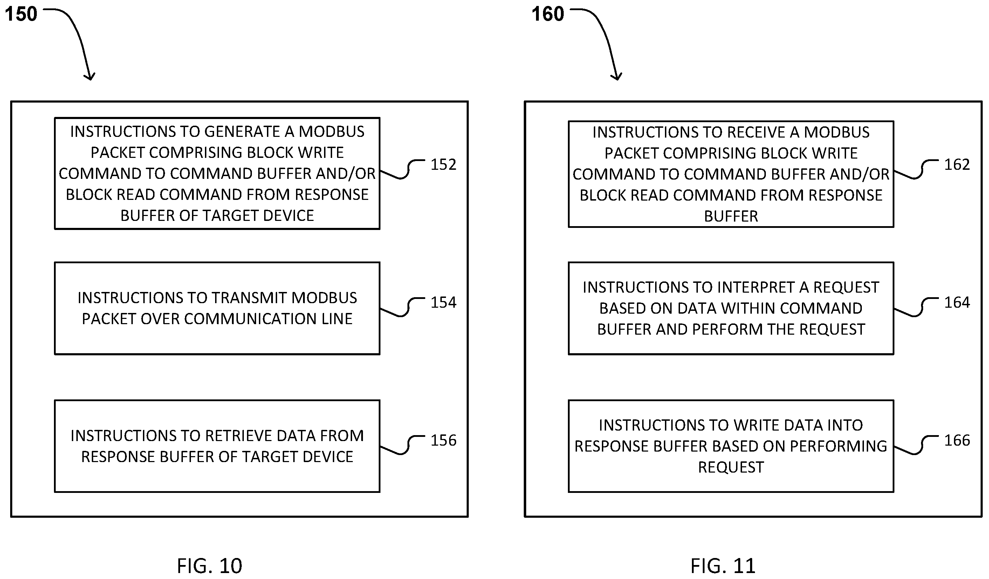

In view of the above, FIG. 10 illustrates an example memory 150 according to some implementations. In some examples, the memory 150 may be incorporated into the management system 20 (e.g., as memory 36 shown in FIG. 1, or part of memory 36). The memory 150 is illustrated as having sets of instructions 152-156. The sets of instructions 152-156 can be executable by at least one processor (such as processor 34 shown in FIG. 1) to perform the operations described with respect to the instructions 152-156. The memory 150 may be, include, and/or implement a non-transitory computer-readable medium that stores the instructions 152-156 executable by the at least one processor 34.

As illustrated, the memory 150 includes instructions 152 to generate a Modbus packet 46 comprising a block write command to a command buffer 42 of a target device 18, 19 and/or a block read command from a response buffer 44 of the target device 18, 19. These instructions 152 may be associated with all or portions of at least steps 72, 74 of FIG. 5, steps 82, 84, 90 of FIG. 6, steps 102, 106 of FIG. 7, and/or steps 132, 134 of FIG. 9.

The memory 150 further includes instructions 154 to transmit the Modbus packet 46 over the communication line 22/23. As noted above, the communication line may be a wired line 22 (e.g., RS-485, Ethernet, etc.) or a wireless communication line 23 (e.g., WiFi, Wi-SUN, Zigbee, Bluetooth^{®}, etc.). These instructions 154 may be associated with all or portions of at least step 74 of FIG. 5, step 84 of FIG. 6, step 102 of FIG. 7, and/or step 134 of FIG. 9.

The memory 150 further includes instructions 156 to retrieve data from a response buffer 44 of the target device 18, 19. These instructions 156 may be associated with all or portions of at least step 78 of FIG. 5 and step 92 of FIG. 6.

Additionally, FIG. 11 illustrates an example memory 160 according to some implementations. In some examples, the memory 160 may be incorporated into a device 18, 19, such as an EHT controller 18 (e.g., as memory 26 shown in FIG. 1, or part of memory 26). The memory 160 is illustrated as having sets of instructions 162-166. The sets of instructions 162-166 can be executable by at least one processor (such as processor 28 shown in FIG. 1) to perform the operations described with respect to the instructions 162-166. The memory 160 may be, include, and/or implement a non-transitory computer-readable medium that stores the instructions 162-166 executable by the at least one processor 28.

As illustrated, the memory 160 includes instructions 162 to receive a Modbus packet 46 from the management system 20, comprising a block write command to a command buffer 42 and/or a block read command from a response buffer 44. These instructions 162 may be associated with all or portions of at least step 74 of FIG. 5, steps 84, 90 of FIG. 6, steps 102, 106 of FIG. 7, and/or step 134 of FIG. 9.

The memory 160 further includes instructions 164 to interpret a request from the management system 20 based on data within the command buffer 42, and perform the request. These instructions 164 may be associated with all or portions of at least step 76 of FIG. 5, step 86 of FIG. 6, steps 104, 108, 112, 116 of FIG. 7, and/or steps 136-142 of FIG. 9.

The memory 160 further includes instructions 166 to write data into the response buffer 44 based on performing the request. These instructions 156 may be associated with all or portions of at least step 76 of FIG. 5, steps 88, 92 of FIG. 6 and/or steps 104, 110, 112 of FIG. 7.

As used herein, the phraseology and terminology used is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings, and may also include fluid and electrical connections.

Also as used herein, the use of "including," "comprising," or "having" and variations thereof is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of' (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Also as used herein, unless otherwise limited or defined, "substantially identical" indicates that features or components are manufactured using the same processes according to the same design and the same specifications. In some cases, substantially identical features can be geometrically congruent.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, of a method of otherwise implementing such capabilities, of a method of manufacturing relevant components of such a device or system (or the device or system as a whole), and of a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

Features which are described in the context of separate embodiments may also be provided in combination in a single embodiment. Features which are, for brevity, described in the context of a single embodiment, may also be provided separately or in any suitable sub-combination, or combined as new embodiments. The applicant hereby gives notice that new claims may be formulated to one or more features and/or combinations of such features during the prosecution of the present application or of any further application derived therefrom. Features of the devices and systems described may be incorporated into/used in corresponding methods and vice versa.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A communication method for a management system of a control system including a plurality devices in communication with the management system over a communication line, the method comprising:
the management system generating a Modbus packet comprising:
a block write command to a first contiguous array of registers of a device of the plurality of devices, collectively designated as a command buffer, wherein the block write command corresponds to a request for the device to perform an action, and
a block read command to a second contiguous array of registers of the device, collectively designated as a response buffer;
the management system transmitting the Modbus packet over the communication line to the device; and
the management system receiving data from the response buffer in response to the block read command, the data written into the response buffer by the device based on the request.

2. The communication method of claim 1, wherein generating the Modbus packet further comprises mapping keywords of the request to single byte tokens.

3. The communication method of claim 1 or claim 2, wherein generating the Modbus packet further comprises encrypting contents of the block write command and the block read command into ciphertext; and/or
wherein generating the Modbus packet further comprises incorporating a forward error correction field in a payload of the Modbus packet.

4. The communication method of claim 1, claim 2 or claim 3, wherein generating the Modbus packet further comprises incorporating a macro into the block write command, such that the block write command corresponds to a list of requests for the device to perform multiple actions; or
wherein generating the Modbus packet further comprises incorporating a device identifier associated with the device in a payload of the Modbus packet instead of a header of the Modbus packet.

5. The communication method of claim 1 or of any of claims 2 to 4, wherein the management system transmitting the Modbus packet over the communication line to the device includes the management system transmitting the Modbus packet over an RS-485 communication line to the device; or
wherein the management system transmitting the Modbus packet over the communication line to the device includes the management system transmitting the Modbus packet over a wireless communication line to the device.

6. A communication method for a device within a control system comprising a plurality of devices in communication with a management system over a communication line, the method comprising:
the device receiving a Modbus packet from the management system over the communication line, the Modbus packet comprising:
a block write command to a first contiguous array of registers of the device, collectively designated as a command buffer, wherein the block write command corresponds to a request for the device to perform an action, and
a block read command to a second contiguous array of registers of the device, collectively designated as a response buffer;
the device interpreting the request based on data within the command buffer, including determining registers of the device associated with the request, the registers being outside of the first contiguous array of registers and the second contiguous array of registers;
the device performing the request; and
the device writing data into the response buffer based on performing the request, to be read by the management system.

7. The communication method of claim 6, wherein interpreting the request further comprises mapping single byte tokens within the data within the command buffer to keywords associated with the request.

8. The communication method of claim 6 or claim 7, wherein interpreting the request further comprises decrypting contents of the block write command and the block read command from ciphertext into plaintext.

9. The communication method of claim 6, claim 7 or claim 8, wherein interpreting the request further comprises reading a macro in the block write command, and obtaining, from memory, a list of requests associated with the macro to perform multiple actions; or
wherein interpreting the request further comprises determining that the request is for the device to perform the action based on a device identifier associated with the device in a payload of the Modbus packet instead of a header of the Modbus packet.

10. The communication method of claim 6 or of any of claims 7 to 9, wherein the device receiving the Modbus packet from the management system over the communication line includes the device receiving the Modbus packet from the management system over an RS-485 communication line; or
wherein the device receiving the Modbus packet from the management system over the communication line includes the device receiving the Modbus packet from the management system over a wireless communication line.

11. A communication method for a device within a control system comprising a plurality of devices in communication with a management system over a communication line, the method comprising:
the device receiving a first Modbus packet from the management system over the communication line, the first Modbus packet comprising:
a first block write command to a first contiguous array of registers of the device, collectively designated as a command buffer, wherein the first block write command corresponds to a request for the device to perform an action, and
a first block read command to a second contiguous array of registers of the device, collectively designated as a response buffer;
the device writing first data into the response buffer, to be read by the management system through the first block read command, indicating that a response to the request is not yet available;
the device processing the request based on data within the command buffer;
the device performing the request;
the device writing second data into the response buffer based on performing the request; and
the device receiving a second Modbus packet from the management system over the communication line, the second Modbus packet comprising a second block read command from the response buffer.

12. The communication method of claim 11, wherein the response buffer includes a first response buffer and a second response buffer, wherein the device writing first data into the response buffer, to be read by the management system through the first block read command, indicating that the response to the request is not yet available comprises:
the device writing the first data into the first response buffer indicating that the response to the request is not yet available; and
the device activating the first response buffer and deactivating the second response buffer so that the management system reads the first response buffer through the first block read command.

13. The communication method of claim 12, wherein the device writing the second data into the response buffer based on performing the request includes the device writing the second data into the second response buffer; and further comprising:
upon completion of the request, the device acting the second response buffer and deactivating the first response buffer so that the management system reads the second response buffer through the second block read command.

14. The communication method of claim 13, wherein the device writing the first data into the first response buffer indicating that the response to the request is not yet available further comprises indicating a delay before the management system is to transmit the second Modbus packet.

15. The communication method of claim 14, further comprising determining an updated delay time before the management system is to transmit the second Modbus packet; and updating the first data in the first response buffer to indicate the updated delay time.
